# EUROPEAN PATENT APPLICATION

(11) **EP 4 293 801 A1**
(43) Date of publication of application: **20.12.2023**
(21) Application number: 23178801.9
(22) Date of filing: 12.06.2023
(51) Int. Cl.: H01M 50/105, H01M 50/117, H01M 50/122, H01M 50/124

(54) **POUCH-TYPE SECONDARY BATTERY INCLUDING FIRE EXTINGUISHING DEVICE**

(30) Priority: 13.06.2022 KR 20220071615
(71) Applicant: SK On Co., Ltd., Seoul 03161 (KR)
(72) Inventor: JEONG, Bo Ra, 34124 Daejeon (KR); KIM, Dong Hee, 34124 Daejeon (KR); MOON, Sin Young, 34124 Daejeon (KR); SHIN, Jeong Hun, 34124 Daejeon (KR)
(74) Representative: Stolmár & Partner Patentanwälte PartG mbB

(57) **Abstract**

A pouch-type secondary battery comprises an electrode assembly, and a pouch case surrounding the electrode assembly. At least three surfaces, among four surfaces of a side surface in a thickness direction of the electrode assembly, include a sealed portion. An electrode lead is drawn out from a sealed portion of at least one of the three sealed portions. The pouch-type secondary battery includes a fire extinguishing device on an external surface of the pouch case.

## Description

### BACKGROUND

### 1. FIELD

The present disclosure relates to a pouch-type secondary battery including a fire extinguishing device.

### 2. DESCRIPTION OF RELATED ART

With the expansion of the electric vehicle market, a secondary battery having high energy density has been actively researched. However, interest in the safety of the secondary battery has been increasing due to recent electric vehicle fire accidents.

As a method to prevent thermal runaway in case of ignition in an actual cell or module, there are a method of blocking current on an electric circuit basis, and a method of installing fire extinguishing equipment in the cell or module.

However, due to the nature of thermal runaway, it is difficult to control thermal runaway by cutting off current when ignition starts. Fire extinguishing equipment according to the related art takes up a lot of space and reduces space efficiency. Accordingly, it is not suitable in terms of energy efficiency, and thus the conventional fire extinguishing equipment needs improvements.

In a three-surface sealing pouch-type secondary battery, dead space in which energy cannot be stored may be generated due to the presence of a sealed portion caused by sealing of a pouch case, protrusion of an electrode lead, and a process of folding the sealed portion to prevent corrosion, such that there is a limitation in that energy density may be reduced.

Accordingly, there is demand for a fire extinguisher technology for not reducing energy density while using the dead space of the pouch-type secondary battery.

### SUMMARY

An aspect of the present disclosure is to promote battery safety by allowing a pouch-type secondary battery to include a fire extinguishing device to suppress flames or suppress a fire in thermal runaway caused by ignition in a cell or module.

Another aspect of the present disclosure is to provide a secondary battery not requiring additional space due to installation of a fire extinguishing device and not reducing energy density.

According to an aspect of the present disclosure, there is provided a pouch-type secondary battery including an electrode assembly, and a pouch case surrounding the electrode assembly. At least three surfaces, among four surfaces of a side surface in a thickness direction of the electrode assembly, include a sealed portion. An electrode lead may be drawn out from a sealed portion of at least one of the three sealed portions. The pouch-type secondary battery includes a fire extinguishing device on an external surface of the pouch case. The fire extinguishing device may spray a fire extinguishing agent at a temperature greater than or equal to a reference point temperature.

The fire extinguishing device may be on the side surface in the thickness direction having the sealed portion.

The fire extinguishing device may be on the side surface in the thickness direction from which the electrode lead is drawn out.

A sealed portion of a side surface in the thickness direction from which the electrode lead is drawn out may be folded in a direction. The fire extinguishing device may be on the side surface in the thickness direction having the folded sealed portion.

The pouch case may have a connection portion connecting the body portion and a cover portion to each other. The three surfaces among the four surfaces of the side surface in the thickness direction of the electrode assembly may include a sealed portion sealing the electrode assembly by edges of the body portion and the cover portion bonded to each other, and the connection portion may be positioned on a remaining surface. The fire extinguishing device may be on the side surface in the thickness direction of the electrode assembly on the connection portion is positioned.

The fire extinguishing device may have a thickness of 100 um to 500 µm.

The temperature greater than or equal to the reference point temperature may be 100°C to 150°C.

The fire extinguishing agent may be in the form of a gel or a powder.

The fire extinguishing agent being in the form of a powder may be at least one selected from the group consisting of sodium bicarbonate (NaHCO₃), potassium hydrogen carbonate (KHCO₃), ammonium zeolite (NH₄H₂PO₄), and a mixture of potassium hydrogen carbonate (KHCO₃) and urea ((NH₂)₂CO).

The fire extinguishing device may include a base film, and a a core-shell is on a surface of the base film. A shell may include a fire extinguishing agent therein.

The shell may melt at the temperature greater than or equal to the reference point temperature, and may spray the fire extinguishing agent at the temperature greater than or equal to the reference point temperature.

The shell may have a thickness of 10 um to 20 µm.

The shell may be formed of at least one material selected from the group consisting of polyethylene (PE), polyurethane (PU) and polyurea.

The particle having the core-shell structure may have a diameter of 10 um to 50 µm.

The fire extinguishing device may include a sealed envelope-type film, and a fire extinguishing agent filled in an envelope-type film.

The envelope-type film may melt and may spray the fire extinguishing agent at the temperature greater than or equal to the reference point temperature.

The envelope-type film may be formed of at least one material selected from the group consisting of polyethylene (PE), polypropylene (PP), polyurethane (PU), and polyvinyl chloride (PVC) .

The envelope-type film may have a thickness of 50 um to 100 µm.

According to example embodiments of the present disclosure, a pouch-type secondary battery may include a fire extinguishing device, such that a fire may be extinguished in a cell or module at an early stage upon ignition within the battery, thereby securing battery safety.

According to example embodiments of the present disclosure, the fire extinguishing device may be disposed in a dead space generated by sealing a pouch case, such that a space for installing the fire extinguishing device may not be required, thereby maximizing space efficiency and suppressing a reduction in energy density.

In addition, according to example embodiments of the present disclosure, a fire extinguishing agent may be automatically sprayed from the fire extinguishing device when the pouch-type secondary battery is ignited, such that an additional circuit for operating the fire extinguishing device may not be required.

### BRIEF DESCRIPTION OF DRAWINGS

FIG. 1 is a front view schematically illustrating a general pouch-type secondary battery;
FIG. 2 is a side view of the pouch-type secondary battery of FIG. 1;
FIG. 3 illustrates an example of a fire extinguishing device according to an example embodiment of the present disclosure, and is a schematic view of a fire extinguishing device in which a core-shell particle is on a surface of a base film;
FIG. 4 is a schematic view of a core-shell particle included in the fire extinguishing device of FIG. 3;
FIG. 5 is a schematic view illustrating a concept in which a fire extinguishing agent is sprayed from the fire extinguishing device of FIG. 3;
FIG. 6 illustrates an example of a fire extinguishing device according to another example embodiment of the present disclosure, and is a schematic view illustrating a fire extinguishing device in which a fire extinguishing agent is filled in a sealed envelope-type film and a concept in which the fire extinguishing agent is sprayed from the fire extinguishing device;
FIG. 7 is a schematic view illustrating an example in which a fire extinguishing device is on a side surface of a folded sealed portion of a pouch-type secondary battery in a thickness direction according to an example embodiment of the present disclosure;
FIG. 8 is a schematic view illustrating an example in which a fire extinguishing device is on a side surface of a pouch-type secondary battery from which an electrode lead is drawn out in a thickness direction according to another example embodiment of the present disclosure; and
FIG. 9 is a schematic view illustrating an example in which a fire extinguishing device is on a side surface in a thickness direction of an electrode assembly on which a connection portion of a pouch-type secondary battery is positioned according to another example embodiment of the present disclosure.

### DETAILED DESCRIPTION

The present disclosure provides a pouch-type secondary battery, and more specifically, provides a pouch-type secondary battery including an electrode assembly 10 and a pouch case 20 surrounding the electrode assembly 10. The fire extinguishing device 30 may be on the exterior of the pouch case 20. The exterior of the pouch case 20 may include the fire extinguishing device 30, such that a fire may be extinguished at an early stage when the fire occurs in the battery, thereby promoting battery safety.

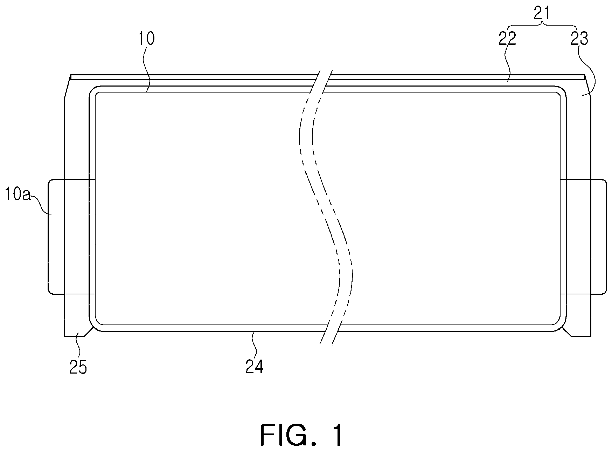

FIG. 1 is a front view illustrating a pouch-type secondary battery according to the present disclosure. As illustrated in FIG. 1, the pouch-type secondary battery according to the present disclosure may include an electrode assembly 10 and a pouch case 20 surrounding the electrode assembly 10. In addition, an electrolyte may be filled in the pouch case 20, together with the electrode assembly 10.

In an example embodiment of the present disclosure, the electrode assembly 10 accommodated in the pouch case 20 may include at least one positive electrode having a positive electrode mixture layer including a positive electrode active material on at least one surface of a positive electrode current collector, at least one negative electrode having a negative electrode mixture layer including a negative electrode active material on at least one surface of a negative electrode current collector, and a separator may be interposed between the positive electrode and the negative electrode.

For example, the electrode assembly 10 may be a stacked-type electrode assembly 10 in which a plurality of positive electrodes and a plurality of negative electrodes are alternately stacked and a separator is interposed between the positive electrode and the negative electrode, a stacked and folded-type electrode assembly 10 in which a plurality of positive electrodes and a plurality of negative electrodes are alternately stacked by folding a rectangular separator, a wound-type electrode assembly 10 in which a rectangular positive electrode, a rectangular negative electrode, and a rectangular separator between the positive electrode and the negative electrode are stacked and wound in a direction, or two or more combinations thereof.

The electrode assembly 10 may be connected to an electrode lead 10a by focusing an electrode tab, an electrode uncoated portion, drawn out from an electrode current collector of each electrode. The electrode lead 10a connected to the electrode tab may be formed to extend toward the exterior of the pouch case 20 to provide a path for an electron to move between the interior and the exterior of the pouch case 20.

A connection method between the electrode tab and the electrode lead 10a is not particularly limited. For example, the electrode tab may be connected to the electrode lead 10a by welding. A portion of the electrode lead 10a may be exposed to the exterior of the pouch case 20, and the electrode lead 10a exposed to the exterior of the pouch case 20 may be electrically connected to an external terminal.

The electrode leads 10a of the negative electrode and the positive electrode may be drawn in the same direction of the electrode assembly 10 or in different directions. The pouch-type secondary battery illustrated in FIG. 1 represents an example in which the electrode lead 10a are drawn in both directions.

In an example embodiment of the present disclosure, a shape, a material, and the like the pouch case 20 are not particularly limited as long as they are generally used in the field of secondary batteries. For example, the pouch case 20 may be formed by sequentially stacking a first resin layer, a metal layer, and a second resin layer. In addition, although the present disclosure is not limited thereto, an adhesive layer for bonding the metal layer and the second resin layer to each other may be present between the metal layer and the second resin layer.

The first resin layer may provide thermal adhesiveness, and may be formed of a material capable of providing adhesiveness by being melted by heat. For example, the first resin layer may be formed of polyolefin resin such as polypropylene (PP) resin. In addition, the second resin layer may be formed of at least one of a nylon resin and a polyethylene terephthalate (PET) resin. The metal layer may be an aluminum foil.

The pouch case 20 may include a body portion accommodating the electrode assembly 10 and a cover portion. The body portion and the cover portion may have the same material. The body portion and the cover portion may be separated from each other, and the body portion and the cover portion may be connected to each other by a connection portion to be a single pouch case 20, and the pouch case 20 may be folded at the connection portion to be provided as the body portion and the cover portion.

In a state in which the electrode assembly 10 is accommodated, a first resin layer of the body portion and a first resin layer of the cover portion may be brought into contact with each other, and heat and pressure may be applied to perform sealing. In this case, four surfaces may be sealed when the pouch is separated into the body portion and the cover portion, and three surfaces may be sealed to form a sealed portion 21 when the single pouch is folded and provided as the body portion and the cover portion. Hereinafter, a pouch-type secondary battery formed by three-surface sealing will mainly be described.

Herein, a length direction (first direction) of the electrode assembly 10 may be a direction connecting both ends of the electrode assembly 10 at which the electrode lead 10a is disposable. A width direction (second direction) of the electrode assembly 10 may be a direction, perpendicular to the length direction (first direction) on a plane on which the electrode lead 10a is formed. A thickness direction (third direction) of the electrode assembly 10, a direction in which a positive electrode and a negative electrode included in the electrode assembly 10 are stacked, may be a direction, perpendicular to both the length direction (first direction) and the width direction (second direction) . In addition, a side surface in the thickness direction of the electrode assembly 10 may refer to a surface, perpendicular to both the length direction (first direction) and the width direction (second direction).

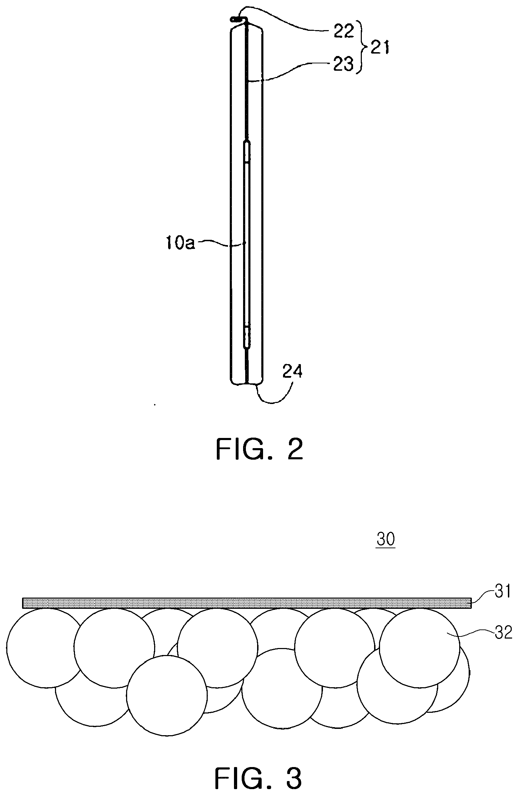

The sealed portion 21 may be formed on the side surface in the thickness direction of the electrode assembly 10. FIGS. 1 and 2 are schematic diagrams illustrating a pouch-type secondary battery having sealed three surfaces, and FIG. 1 is a front view and FIG. 2 is a side view. As illustrated in FIGS. 1 and 2, when three-surface sealing is performed, the sealed portion 21 is formed on three surfaces of the side surface in the thickness direction of the electrode assembly 10, and a remaining surface may be in close contact with the connection portion to be covered by the connection portion, and may not include the sealed portion 21.

In a region in which the electrode lead 10a is drawn out from the pouch case 20, the first resin layers of the body portion and the cover portion of the pouch case may oppose each other in a state in which the electrode lead 10a is drawn out, and may be thermally fused to form the sealed portion 21.

In FIGS. 1 and 2, when a side surface not including the sealed portion 21 by the connecting portion positioned thereon to cover the electrode assembly 10 is referredto as a bottom portion 24, the bottom portion 24 may include a top sealed portion 22, a sealed portion 21 positioned at an opposite end of the bottom portion 24, a side surface from which the electrode lead 10a is drawn out, and a side sealed portion 23, a sealed portion 21 of a side surface positioned at an opposite end thereof.

As illustrated in FIG. 2, the top sealed portion 22 may be folded in a direction one or more times to minimize a space occupied by the pouch-type secondary battery, thereby increasing a capacity of the secondary battery and preventing a short circuit that may occur due to exposure of a metal layer included in the interior of the pouch case 20 to the outside.

When four-surface sealing is performed, the bottom portion 24 may also include the sealed portion 21, and the sealed portion 21 may be folded.

The pouch case 20 may include an electrolyte therein, together with the electrode assembly 10. The electrolyte is not particularly limited, and an electrolyte commonly used in nonaqueous electrolyte secondary batteries may be used, but a lithium salt such as LiPF₆, LiBF₄, or the like may be included in an organic solvent such as ethylene carbonate (EC), propylene carbonate (PC), diethyl carbonate (DEC), ethyl methyl carbonate (EMC), dimethyl carbonate (DMC), or the like.

In a secondary battery, as internal temperature rises during driving of the battery, a gas may be generated due to vaporization of an electrolyte or a side reaction between the electrolyte and an electrode. As a result, the pouch case 20 may be unsealed to cause the electrolyte to contact air, resulting in a fire. Such a fire may be transferred to an adjacent secondary battery to cause a chain reaction fire.

Accordingly, in an example embodiment of the present disclosure, when thermal runaway or fire, reaching a specific temperature or higher, occurs, a fire extinguishing device 30 capable of extinguishing flames may be installed in the exterior of the pouch case 20, thereby extinguishing flames at an early stage and preventing transfer to adjacent cells.

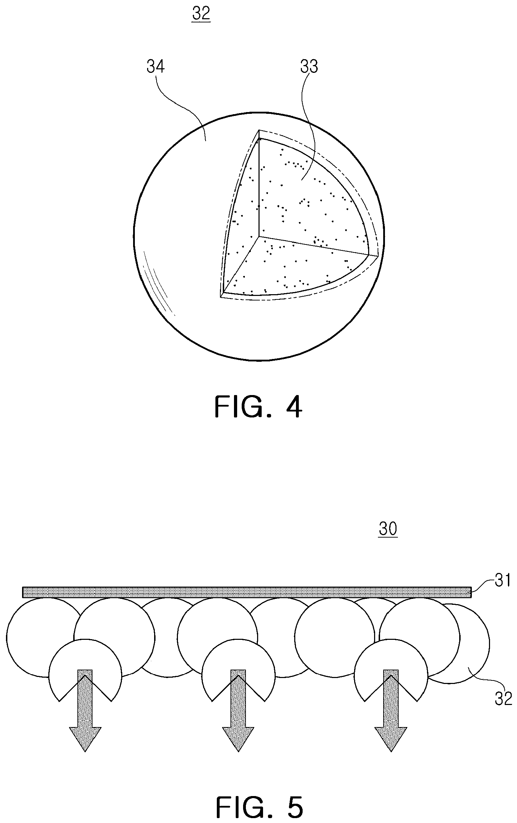

As schematically illustrated in FIG. 3, the fire extinguishing device 30 may have a core-shell particle 32 on a base film 31. In addition, FIG. 4 schematically illustrates an example of the core-shell particle 32, and the core-shell particle 32 may include a fire extinguishing agent 33 as a core substance in the shell 34.

The fire extinguishing device 30 may maintain durability and airtightness within a temperature range below a reference point temperature of a secondary battery. At a temperature greater than or equal to the reference point temperature, especially when the temperature rises due to occurrence of a fire, the shell 34 may melt, and the fire extinguishing device 30 may extinguish the fire by spraying the fire extinguishing agent 33, a core substance included in the melting shell 34.

The reference point temperature may refer to a temperature at which the fire extinguishing device 30 operates to prevent thermal runaway of the secondary battery. The thermal runaway may refer to a phenomenon in which a gas is generated due to vaporization of an electrolyte or a side reaction between the electrolyte and an electrode as internal temperature rises during driving of a secondary battery, thereby causing an electrolyte decomposition reaction. In the core-shell particle 32, the fire extinguishing agent 33, the core substance, may be a fire extinguishing agent commonly used for extinguishing flames, and may be in the form of a gel or a powder.

The fire extinguishing agent 33 being in the form of a powder is not particularly limited, but may be, for example, at least one from the group consisting of first-type dry chemical powder NaHCO₃ sodium bicarbonate (sodium bicarbonate), second-type dry chemical powder KHCO₃ potassium hydrogen carbonate (potassium bicarbonate), third-type dry chemical powder NH₄H₂PO₄ ammonium dihydrophosphate, and a mixture of fourth-type dry chemical powder KHCO₃⁺ (NH₂)₂CO potassium bicarbonate and urea.

The shell 34 may use a material melting at a temperature greater than or equal to the reference point temperature while maintaining the form thereof within a temperature range below the reference point temperature of the battery. The temperature greater than or equal to the reference point temperature is not particularly limited, but may be, for example, a temperature within a range of 100°C to 150°C. When the temperature greater than or equal to the reference point temperature is less than 100°C, the shell 34 may melt even when volume expansion of a cell caused by vaporization of ab electrolyte does not occur. When the temperature exceeds 150°C, structures of positive and negative electrodes may collapse, resulting in thermal propagation in which ignition of a pouch-type secondary battery spreads to another pouch-type secondary battery. However, the shell 34 may not melt even when the thermal propagation proceeds.

A material of the shell 34 is not particularly limited. As long as a material melts within a range of the temperature greater than or equal to the reference point temperature, the material may be used for the shell 34. The material may be, for example, polyethylene (PE), polyurethane (PU), or polyurea, but the material is not limited thereto.

The shell 34 may have an average thickness of 10 µm to 20 um, but the average thickness of the shell 34 is not limited thereto. When the thickness of the shell 32 is less than 10 µm, it may be difficult to sufficiently include the fire extinguishing agent 33 due to poor durability. When the thickness of the shell 32 exceeds 20 um, the shell 32 may not be sufficiently melted by heat. The core-shell particle 32 may have an average particle diameter of 10 um to 50 µm, but the average particle of the core-shell particle 32 is not limited thereto. When a size of the core-shell particle 32 is less than 10 µm, it may be difficult to sufficiently include the fire extinguishing agent 33 due to poor durability. When the size of the core-shell particle 32 exceeds 50 µm, a sufficient amount of the shell 34 may not be included.

A material of the base film 31 is not particularly limited as long as the material has excellent adhesion to the core-shell particle 32 and is easily attachable to the exterior of the pouch-type secondary battery. For example, the base film 31 may be a film formed of polyurethane (PU), nylon, polyethylene (PE), or polypropylene (PP).

The base film 31 may have a thickness of 100 um to 200 µm, but the thickness of the base film 31 is not limited thereto. When the thickness of the base film 31 is less than 100 µm, the core-shell particle 32 may not be sufficiently accommodated. When the thickness of the base film 31 exceeds 200 µm, the pouch-type secondary battery may have lowered energy density.

The fire extinguishing device 30 may be manufactured by attaching the core-shell particle 32 including the fire extinguishing agent 33 to a surface of the base film 31. In attaching the core-shell particle 32 to the base film 31, a method of using a predetermined binder or dispersing the core-shell particle 32 nanonized in a binder solution and then curing the core-shell particle 32 on the base film 31 may be available. A type of the binder is not particularly limited, and a type of binder not causing damage to the core-shell particle 32 may be selected. For example, when the core-shell particle 32 is attached onto the base film 31, epoxy, acrylate, or the like may be used as the binder. When the method of dispersing the core-shell particle 32 nanonized in the binder solution and then curing the core-shell particle 32 on the base film 31 is used, silicon, EVA, polyurethane (PU), or the like may be used.

The fire extinguishing device 30 may be on a surface of the pouch case 20 using an adhesive on an opposite surface of the base film 31 to which the core-shell particle 32 is attached. The adhesive is not particularly limited as long as the adhesive does not damage a second resin layer of an external surface of a pouch. For example, an epoxy-based thermosetting adhesive may be used.

The above-described fire extinguishing device 30 may be on the exterior of the pouch case 20. When temperature rises due to ignition in the battery, as schematically illustrated in FIG. 5, the shell 34 of the fire extinguishing device 30 may melt and the fire extinguishing agent 33 included in the shell 34 may be sprayed to extinguish a fire at an early stage, and also to prevent the fire from spreading to an adjacent pouch-type secondary battery, thereby improving stability of the battery.

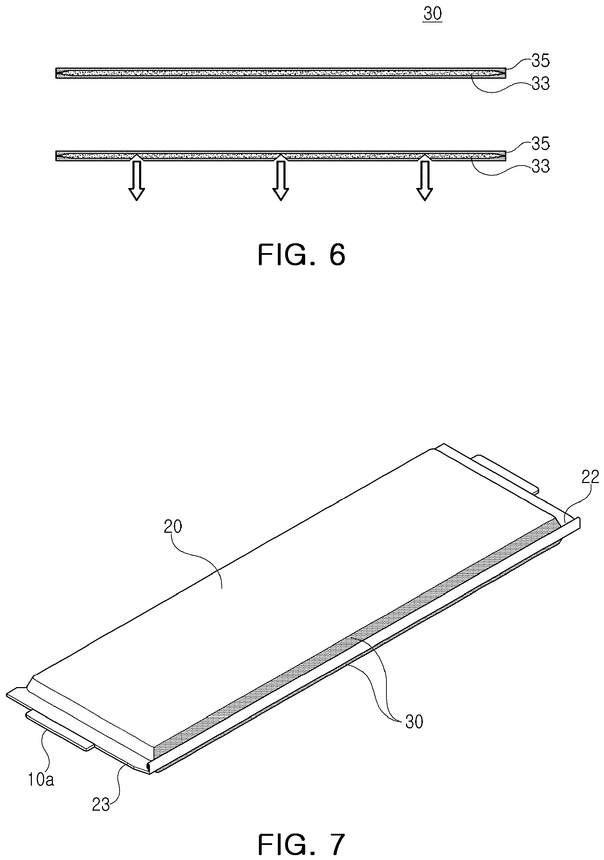

In another example embodiment of the present disclosure, an example of the fire extinguishing device 30 is schematically illustrated in FIG. 6A. As illustrated in FIG. 6A, the fire extinguishing device 30 may include a sealed envelope-type filled with the fire extinguishing agent 33.

The fire extinguishing device 30 may maintain durability and airtightness within a temperature range below a reference point temperature of a secondary battery. At a temperature greater than or equal to the reference point temperature, especially when the temperature rises due to occurrence of a fire, a sealed envelope-type film 35 may melt, and the fire extinguishing device 30 may extinguish the fire by spraying the fire extinguishing agent 33, a core substance included in the melting sealed envelope-type film 35.

The fire extinguishing agent 33 included in the sealed envelope-type film 35 may be the same as the fire extinguishing agent 33 included in the core-shell particle 32, and a detailed description thereof will be omitted.

A material of the envelope-type film 35 may be a material maintaining the form thereof within a range of a temperature less than the reference point temperature of the battery and melting at a temperature greater than or equal to the reference point temperature, and may be formed of at least one material selected from the group consisting of polyethylene (PE), polypropylene (PP), polyurethane (PU), and polyvinyl chloride (PVC).

The envelope-type film 35 may be formed using a film formed of a material the same as the above-described material. The envelope-type film 35 may have a thickness of 50 µm to 100 µm, but the thickness of the envelope-type film 35 is not limited thereto. When the thickness of the envelope-type film 35 is less than 50 µm, the fire extinguishing agent 33 may not be sufficiently included. When the thickness of the envelope-type film 35 exceeds 100 µm, the envelope-type film 35 may not be sufficiently melted by heat.

The fire extinguishing device 30 including the fire extinguishing agent 33 in the sealed envelope-type film 35 according to the present example embodiment may be manufactured by injecting a fire extinguishing agent therein and sealing an entire surface thereof. A surface of the fire extinguishing device 30 may be on an external surface of the pouch case 20 using an adhesive. The adhesive may be the same as the adhesive used to attach the fire extinguishing device 30 to which the core-shell particle 32 is on the external surface of the pouch, and thus a detailed description thereof will be omitted.

The above-described fire extinguishing device 30 may be on the exterior of the pouch case 20. When temperature rises due to ignition in the battery, as schematically illustrated in FIG. 6A, at least a portion of the envelope-type film of the fire extinguishing device 30 may melt to be unsealed. Thus, the fire extinguishing agent 33 included therein may be sprayed to extinguish a fire at an early stage, and also to prevent the fire from spreading to an adjacent cell, thereby improving stability of the battery.

The fire extinguishing device 30 according to each example embodiment of the present may have a thickness of 100 um to 500 µm, but the thickness of the fire extinguishing device 30 is not limited thereto . When the thickness of the fire extinguishing device 30 is less than 100 µm, fire extinguishing capability may be lowered. When the thickness of the fire extinguishing device 30 exceeds 500 µm, the pouch-type secondary battery may have lowered energy density.

As described above, the fire extinguishing device 30 according to each example embodiment may be on the external surface of the pouch case 20 using an adhesive. In this case, the adhesive may be applied in advance to a surface of the fire extinguishing device 30, and a release paper may be on an adhesive layer by the adhesive. Accordingly, when the fire extinguishing device 30 is on the external surface of the pouch, the release paper may be removed, such that the fire extinguishing device 30 may be attached in a desired position.

The above-described fire extinguishing device 30 according to the present disclosure may be on the exterior of the pouch exterior material 20, and specifically, may be on a dead space outside the pouch case 20. The dead space may be an empty blank region not contributing to storage of energy.

Specifically, the fire extinguishing device 30 may be on a side surface in a thickness direction of the pouch case 20 having the sealed portion 21. A position in which the fire extinguishing device 30 is attached is schematically illustrated in FIGS. 7 to 9.

As illustrated in FIG. 7, the fire extinguishing device 30 may be on a side surface in a thickness direction of the pouch case 20 on which a top sealed portion 22 is formed. On the side surface on which the top sealed portion 22 is formed, a step may be formed between a side surface in a thickness direction of the pouch-type secondary battery and a secondary battery module by the top sealed portion 22 to have a dead space. Accordingly, the dead space may be used by attaching the fire extinguishing device 30 to the side surface in the thickness direction on which the top sealed portion 22 is formed, and thus a space for attachment of the fire extinguishing device 30 may not be required.

In this case, the fire extinguishing device 30 may be on both side surfaces or either side surface in the thickness direction with respect to the top seal portion 22.

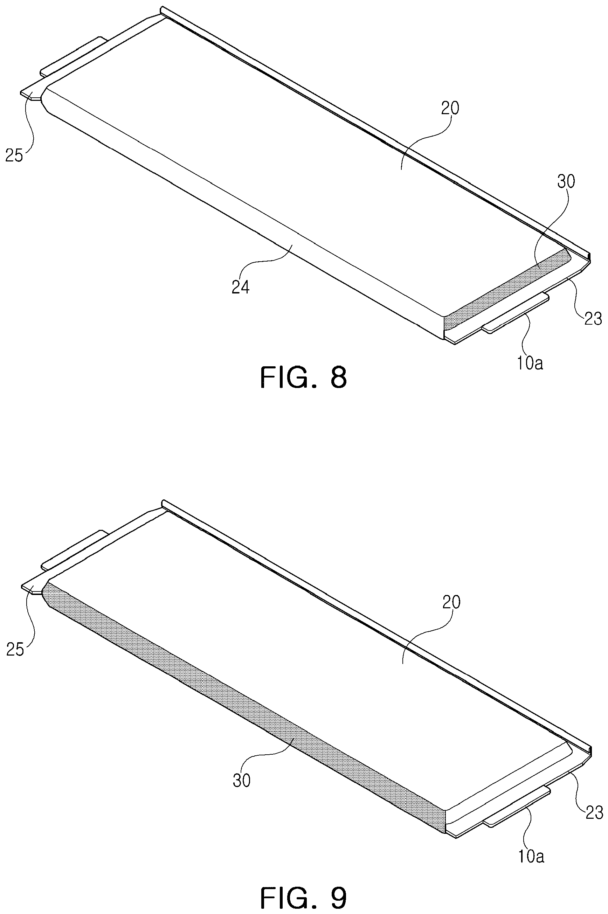

In addition, as illustrated in FIG. 8, the fire extinguishing device 30 may be on a side surface in the thickness direction of the pouch case 20 on which a side sealed portion 23, a sealed portion 21 of a side surface from which the electrode lead 10a is drawn out, is formed. A step may be formed between the side surface on which the side sealed portion 23 is formed and the side surface in the thickness direction of the pouch-type secondary battery by the side sealed portion 23 to have a dead space. Accordingly, the dead space may be used by attaching the fire extinguishing device 30 to the side surface in the thickness direction on which the side sealed portion 23 is formed, and thus a space for attachment of the fire extinguishing device 30 may not be required.

In this case, the fire extinguishing device 30 may be on both side surfaces or either side surface in the thickness direction with respect to the side sealed portion 23.

In addition, the fire extinguishing device 30 may be on the side sealed portion 23.

In addition, as illustrated in FIG. 9, the fire extinguishing device 30 may be on the bottom portion 24 of the pouch-type secondary battery. A sealed protrusion 25, also referred to as a shark fin, may be formed due to the side sealed portions 23 formed at both ends of the bottom portion 24. A step may be present between the sealed protrusion 25 and the bottom portion 24 to generate a dead space, and thus a space for attachment of the fire extinguishing device 30 may not be required.

The fire extinguishing device 30 may be formed on the side surface in the thickness direction of the pouch case 20 on which the top sealed portion 22, the side surface in the thickness direction of the pouch case 20 on which the side sealed portion 23 is formed, and the bottom portion 24, and is not particularly limited. However, in the case of a four-surface sealed pouch-type secondary battery, the bottom portion 24 may have a sealed portion 21 having a shape the same as that of the top sealed portion 22, and thus the fire extinguishing device 30 may be formed on the side surface in the thickness direction on which the top sealed portion 23 is formed.

According to each example embodiment of the present disclosure, the fire extinguishing device 30 may be on the dead space of the pouch-type secondary battery, and thus a space for attachment of the fire extinguishing device 30 may not be required, thereby preventing a reduction in capacity of the battery, suppressing flames in the event of a fire, and preventing transfer to an adjacent cell.

In addition, in the event of a fire, a space for extinguishing the fire may not be required, such that maintenance and management may not be required, and high energy density may be maintained.

Furthermore, when a fire occurs in the pouch-type secondary battery, the fire extinguishing agent 33 may be automatically sprayed from the fire extinguishing device 30 to extinguish or suppress flames, such that an additional circuit for operating the fire extinguisher may not be required.

## Claims

1. A pouch-type secondary battery comprising:
an electrode assembly; and
a pouch case surrounding the electrode assembly,
wherein at least three surfaces, among four surfaces of a side surface in a thickness direction of the electrode assembly, include a sealed portion,
an electrode lead is drawn out from a sealed portion of at least of the three sealed portions,
the pouch-type secondary battery includes a fire extinguishing device on an external surface of the pouch case, and
the fire extinguishing device sprays a fire extinguishing agent at a temperature greater than or equal to a reference point temperature.

2. The pouch-type secondary battery of claim 1, wherein the fire extinguishing device is on the side surface in the thickness direction having the sealed portion.

3. The pouch-type secondary battery of claim 1, wherein the fire extinguishing device is on the side surface in the thickness direction from which the electrode lead is drawn out.

4. The pouch-type secondary battery of claim 1, wherein
a sealed portion of a side surface in the thickness direction from which the electrode lead is not drawn out is folded in a direction, and
the fire extinguishing device is on the side surface in the thickness direction having the folded sealed portion.

5. The pouch-type secondary battery of claim 1, wherein
the pouch case has a connection portion connecting a body portion and a cover portion,
the three surfaces among the four surfaces of the side surface in the thickness direction of the electrode assembly include a sealed portion sealing the electrode assembly by edges of the body portion and the cover portion bonded to each other, and the connection portion is positioned on a remaining surface, and
the fire extinguishing device is on the side surface in the thickness direction of the electrode assembly on the connection portion is positioned.

6. The pouch-type secondary battery of one of claims 1 to 5, wherein the fire extinguishing device has a thickness of 100 um to 500 µm.

7. The pouch-type secondary battery of one of claims 1 to 6, wherein the temperature greater than or equal to the reference point temperature is 100°C to 150°C.

8. The pouch-type secondary battery of one of claims 1 to 7, wherein the fire extinguishing agent is in the form of a gel or a powder.

9. The pouch-type secondary battery of claim 8, wherein the fire extinguishing agent being in the form of a powder is at least one selected from the group consisting of sodium bicarbonate (NaHCO₃), potassium hydrogen carbonate (KHCO₃), ammonium zeolite (NH₄H₂PO₄), and a mixture of potassium hydrogen carbonate (KHCO₃) and urea ((NH₂)₂CO).

10. The pouch-type secondary battery of one of claims 1 to 9, wherein
the fire extinguishing device include:
a base film;
a core-shell particle on a surface of the base film and including a shell; and
a fire extinguishing agent included in the shell.

11. The pouch-type secondary battery of claim 10, wherein the shell is formed of at least one material selected from the group consisting of polyethylene (PE), polyurethane (PU) and polyurea.

12. The pouch-type secondary battery of one of claims 10 and 11,
wherein the shell has a thickness of 10 um to 20 µm,
wherein the particle having the core-shell structure has a diameter of 10 µm to 50 µm.

13. The pouch-type secondary battery of one of claims 1 to 9, wherein the fire extinguishing device includes:
a sealed envelope-type film; and
the fire extinguishing agent filled in the envelope-type film.

14. The pouch-type secondary battery of claim 13, wherein the envelope-type film is formed of at least one material selected from the group consisting of polyethylene (PE), polypropylene (PP), polyurethane (PU), and polyvinyl chloride (PVC).

15. The pouch-type secondary battery of one of claims 13 and 14, wherein the envelope-type film has a thickness of 50 µm to 100 µm.
